# EUROPEAN PATENT SPECIFICATION

(11) **EP 2 705 759 B1**
(45) Date of publication and mention of the grant of the patent: **28.12.2016**
(21) Application number: 13005600.5
(22) Date of filing: 01.04.2010
(51) Int. Cl.: A23G 1/18, A23G 1/00

(54) **APPARATUS FOR CONTINUOUS TEMPERING OF CHOCOLATE MASS**
VORRICHTING ZUM KONTINUIERLICHEN TEMPERIEREN VON SCHOKOLADENMASSE
APPAREIL POUR LE CONDITIONNEMENT THERMIQUE CONTINU DE MASSES DE CHOCOLAT

(43) Date of publication of application: 12.03.2014
(62) Divisional of application: 10075150.2
(73) Proprietor: Aasted ApS, 3520 Farum (DK)
(72) Inventor: Holmud, Dennis, 2860 Søborg (DK)
(74) Representative: Heiden, Finn

(56) References cited:
- EP-A1- 0 872 187
- EP-A1- 0 893 066
- EP-A1- 0 947 140
- EP-A1- 1 425 975
- EP-A1- 1 566 104
- EP-A1- 1 616 487
- EP-A2- 1 050 214
- EP-A2- 1 249 174
- WO-A1-01/06863
- WO-A1-92/00015
- DE-A1- 2 602 877
- DE-A1- 10 329 177
- FR-A- 1 163 921

## Description

The present invention concerns an apparatus for continuous tempering of chocolate mass comprising a cooling stage, a crystallisation stage and a conditioning and mixing stage arranged as a tempering column with a central shaft with stirring tools, as well as a pump means for the chocolate mass.

The apparatus may for example have disc-shaped chocolate chambers interconnected via chocolate channels and intermediary disc-shaped water chambers as well as a central shaft connected with stirring tools arranged in the chocolate chambers. However, the apparatus could have several different inner configurations as long as it is able to perform continuous tempering of fat-containing, crystallisable chocolate mass. The chocolate channels could for example be arranged at the periphery of the chocolate chambers or could be arranged as ring-shaped openings through which the shaft extends. When the openings are ring-shaped the stirring tools are typically sheave-formed. An external pump provides a pressure for the flow of chocolate through the chambers of the apparatus.

The apparatus could also be of the configuration where the column comprises ring-shaped water chambers at the periphery, surrounding an inner circular channel for the chocolate mass in which is arranged a rotating screw extending all through the column. The outer periphery of the screw is typically only a few millimetres from the inner surface wall of the surrounding water chambers. The screw is acting as pump means for the transportation of the chocolate through the column.

The apparatus could also be a so-called high shear tempering apparatus, when the column comprises ring-shaped water chambers surrounding an inner circular channel for the chocolate mass in which is arranged a rotating shaft with two or more longitudinally extending knife means. The knives have surfaces that slides over the inner periphery of the chocolate channel during rotation of the shaft.

Generally, the chocolate mass that may be continuously tempered by the apparatus according to the invention encompass all types of suspensions of non-fat particles such as sugar, milk powders and cocoa solids mixed up with a liquid fat constituent, so that the suspensions are capable of crystallizing. When it comes to the most widely used chocolate mass types, the fat constituent comprises genuine cocoa butter typically in a content of up to approximately 35%. However, the fat phase may also comprise substitutes as well. A small content of up to 2-3 % of genuine cocoa butter may still be left in the recipe. Substitutes may be in the form of other types of fat-containing oils such as palm-kernel oil. Chocolate types having the cocoa butter been replaced by other fats are often named commercially as compound chocolate, especially when the cocoa butter has been replaced completely by palm-kernel oil. Mass made of up to 100% cocoa butter may however also be continuously-tempered. It is used later on as constituent in the production of different chocolate mass recipes.

However, for the continuous tempering to be performed, it is decisive, that whether the fat phase constitutes of genuine cocoa butter or substitutes, the fat phase must be capable of crystallizing into stable crystal types when the mass solidifies, such as the βV-crystals developing in genuine cocoa butter. Only then, eatable chocolate articles with good taste, crisp break and shiny appearance are created. The solidified chocolate articles will also achieve the longest possible shelf life and the best resistance against bloom, as instable crystals are diminished. If there is a content of in-stable crystals left in the mass, they will give rise to shorter shelf-life as the articles will bloom more quickly as when in-stable crystals are not present.

Optimal is then, when the type of crystals are stable βV-crystals only. The content thereof in the ready tempered chocolate mass shall be at a desired content- for example of 1,0 % for a specific production. Only then the manufacturer can rely on that the quality of his chocolate products are always the same.

Before the chocolate mass is supplied to perform the actual tempering process by running continuously through the tempering apparatus, the mass is heated to around 40-50°C in a premature step. Then essentially all the crystals in the chocolate mass are melted. The premature step is typically arranged distant to the tempering apparatus as the mass is heated in a storage tank. However, a heating step could also be arranged in the tempering apparatus in front of the cooling stage.

By the prior art tempering process the chocolate mass is being cooled to around 29-34°C in the cooling stage, so that crystals are very close to be created. Thereafter the mass passes through the crystallisation stage in which the temperature of the mass is typically lowered to 26-30°C. The mass and the heat-exchanging surfaces of the crystallisation stage is so cold, that crystals are created in the mass. The cooling water temperature is generally set to 10-14°C by the tempering apparatus at the market today. The approximate temperature of the heat-exchanging surfaces of the crystallisation stage is advised to be below 18°C, so that crystal creation ("impfning") is performed at the cooling surfaces and not in the mass. Thereafter, the mass is conditioned and the crystals are mixed out through the mass. By conditioning means that creation and development of new crystals in the mass proceed. The temperature is also raised 0,5-2,0°C in the conditioning and mixing stage. The purpose is to melt out as many as possible of the in-stable crystals, which unavoidably are created at the cold surfaces of the crystallisation stage. Desirable is to preserve a content of stable βV-crystals only, by trying to melt up the in-stable crystals, which melt at lower temperatures than the stable βV-crystals. The stable βV-crystals are pre-served in the mass in an amount of typically 0,01% - 5%, preferably in an amount of 0,1% - 2%.

Apparatuses for performing the above continuous tempering methods have dominated the market for many years. Though the cold surfaces of the cooling and crystallisation stages have made the machines smaller in their physical size, they are however still large and expensive, especially when bigger amounts of mass shall be continuously tempered, i.e. more than 500kg/hour. The principle with the cold surfaces of the crystallisation stage also creates a huge amount of in-stable crystals, which very often makes it difficult to achieve the desirable, highest possible quality of the moulded product, especially in terms of shelf-life. This is because it is time consuming and energy consuming to remove in-stable crystals entirely during the final conditioning or reheating stage. The tempering columns of the apparatus would simply be to big and expensive if the conditioning stages should have sufficient capacity to achieve total re-melting of in-stable crystals. When mass with high fat content is tempered, then the amount of in-stable crystals created is also high. Then, the problem is even more exaggerated when chocolate with high fat content such as milk chocolate, white chocolate, nougat or filling mass for pralines are tempered.

A given size of a tempering machine at the market has a fixed length and consequently fixed areas for cooling, crystallisation and reheating.
Due to the above described problematic of continuous tempering of masses with a high fat content, it is well-known today, that the maximum capacity measured in kilograms per hour of tempered mass of a given tempering machine of the ones at the market is lowered severely when recipes with a high fat content are tempered. The maximum capacity is achieved when tempering dark chocolate having a fat content between 20-34% In comparison herewith the capacity is typically lowered around 20% when milk chocolate, compound chocolate, nougat or other mass with a fat content between 30% and 40% is tempered.
When high fat recipes having fat content between 40% and 100% are tempered, the maximum capacity is lowered up to 50%.
A major disadvantage is then a very high energy consumption, firstly for cooling down the total mass and secondly for reheating the mass. Also the energy requirements are high for the chocolate pumps and the gear motors of the tempering machines.

EP 1425975 A1 (Aasted-Mikroverk) discloses an apparatus where a conduit is branched off from the conditioning stage, so that it returns a stream of already crystallised chocolate to the crystallisation stage. In practice it became very difficult to exactly control the degree of crystallisation continuously performed in the crystallisation stage.

EP 1616487 A1 (Sollich) discloses a tempering apparatus, by which already tempered mass is re-circulated to the mixing or conditioning stage, or to the crystallisation stage, for upgrading the concentration of crystals in the mass being tempered.

EP 1249174 A1 (SOLLICH) discloses an apparatus for tempering of chocolate mass comprising a first cooling stage, a second cooling stage and a reheating or mixing stage. In the first and the second cooling stages the chocolate is cooled to 31 to 35ºC without crystallisation. The crystallisation takes place in the mixing stage as further mass is added, which has been enriched with chocolate crystals, such as in already crystallised "seed" powder. An example discloses, that mass is retracted from the tempering apparatus at the end of the cooling stage, is being mixed with the chocolate crystal powder and is added to the tempering apparatus at the beginning of the mixing stage. Another example discloses that mass from the supply tank is being mixed with the chocolate crystal powder and is added at the beginning of the mixing stage.

EP 1180941 A1 (Bühler) discloses a method and an apparatus by which a seed suspension having a content of βVI crystals is prepared by use of a high shear crystalliser, with or without the addition of crystal powder. The seed suspension is subsequently mixed in a content of 0,01% - 0,2% with a main stream of a crystal free mass, such as for example a filling mass with a content of oils derived from nuts. The challenge of this prior method and apparatus seems to be, that the mixing has to be very intensive and thoroughly for the resultant mass to be sufficiently homogenous. Also the method is very time consuming as it takes at least 11/2-2 hours for the seed suspension to be created and the equipment is expensive. Furthermore, is the added seed powder very expensive as it is based on cocoa butter fat.

According to the present invention, the apparatus comprises a primary conduit for chocolate mass, which is arranged by-passing the stage for creating crystals, which conduit is arranged in the shaft, which is hollow.

Then, an amount of mass is by-passed in the shaft of the exchanger without being crystallised, while the remaining stream of the mass is flowing through the crystallisation stage for creating crystals in the mass. Thereafter, the two streams of mass are brought together and mixed in the mixing stage.

The by-passed stream of mass is not cooled more than to the lowest possible temperature without creating crystals. It means, that the temperature of the by-passed stream of mass is approximately 4-5ºC higher than by the traditional tempering process, i.e. by which the complete mass is cooled down for crystallisation. Thereby, the cooling amount for creating crystals in the by-passed mass is superfluous. Consequently, the total amount of cooling energy required for tempering the mass is much lower than by the prior tempering apparatuses.

Hereby is provided an apparatus, which is especially energy saving in comparison with the prior art. The total energy requirements for providing continuously tempered chocolate mass of high quality is lowered by at least 40% and up to 70% for the mostly applied chocolate types, such as dark chocolate, milk chocolate, nougat and white chocolate. The total energy consumption has been measured and compared with the total energy consumption for a prior art tempering apparatus tempering the same amount and type of mass.

The total capacity deliverable from the inventive apparatus is also raised severely in comparison with the prior art. The capacity raise for a particular size of tempering column is up to two times for such common chocolate types as dark chocolate, milk chocolate, white chocolate and compound. The capacity could for example be increased from 1000 kg/hour and up to 3000 kg/hour. Hereby is also achieved the benefit, that when applying the method according to the invention, the physical size of a given tempering machine could be reduced with approximately 30% for delivering the same amount of tempered chocolate per hour. This is especially an advantage, when the tempering apparatus comprises a column and has a high capacity, such as over 1000 kg/hour. Then, the height of the tempering column is reduced up to approximately 30%, for example from 4,0 Meters in height and to under 3,0 Meters in height. For tempering machines having a capacity of tempered chocolate of more than 3000 kg/hour the advantage is especially great. These prior art tempering machines are so big that they are very difficult to handle, to transport and to install. Typically, the only practical solution is to transport the machines with the column in horizontal position and then raise it to vertical at the customers factory during installation. With the inventive solution this is not necessary any longer, instead the height and the gravity of weight of the machines are lowered so much that they can be handled in upright position. The weight of the machines are also reduced severely with the inventive solution as the weight is reduced up to 50%. As the demand from the market for tempering apparatus having capacity over 3000 kg/hour is increasing the inventive solution has a great value. Also it is now possible to manufacture, handle and install tempering columns having a capacity over 8-10.000 kg/hour as their size and especially height as well as weight are severely reduced.

A further advantage is, that instable crystals may potentially only be created in the smaller first stream of mass being crystallised. Then, a much lesser amount of instable crystals are created than by the prior art. Consequently, lesser energy is required for re-melting the remaining instable crystals in the mass as compared with the prior art. But also the quality of the final mass is potentially better, as the amount of in-stable crystals are substantially lesser than by the prior art.

The stream of mass passing through the crystallisation stage is effectively cooled and crystallised. Especially advantageous is, when the conduit is adapted to by-pass more than half of the total amount of mass entering the apparatus.

When more than half of the total mass is by-passed, the remaining stream of mass in the crystallisation stage achieves more than the double time period for passing the crystallisation stage. The crystallisation is then much more effective than by the prior art. Especially the time prolonging has a positive effect on the initialisation and development of crystals in the mass. When the crystallised and the by-passed stream of mass are mixed, the crystals are effectively and homogenously spread out in the final stream of mass in the conditioning and mixing stage. Surprisingly, the amount of crystals are sufficient to achieve a very high quality of the ready tempered mass, which has been proved by taking out numerous tempering curves from samples. Test taken with DSC (Differential Scanning Calorimeter) proves that the samples contain βV-crystals only.

The by-passed stream of mass is kept at a constant temperature immediately before mixing. The temperature is so high, that the by-passed mass is kept free from crystals. The temperature must also be low enough for the crystals in the crystallised stream not to be re-melted during mixing therewith. To find the appropriate temperature for the particular mass is done by simple "trial and error" by withdrawing a sample and making a tempering curve. The temperature is typically between 29 and 34ºC, typically 30-33 ºC, however is dependent of the particular mass. The temperature of the by-passed amount of mass is then 4-7ºC higher than the temperature of the amount of mass passing through the crystallisation stage.

When the primary conduit is adapted to by-pass between 65% and 95% of the total amount of mass entering the apparatus, the savings in energy are especially high. Then 5% to 35% of the total amount of mass is crystallised in the crystallisation stage. Consequently, the available time for crystallisation of the mass passing through the crystallisation stage is severely extended. When 95% of mass is by-passed, the crystallisation time available is twenty times as long as by the prior art. When 90% of mass is by-passed, the crystallisation time available is ten times as long as by the prior art. When 75% of mass is by-passed, the available crystallisation time is extended four times, and when 70% is bypassed the crystallisation time is extended more than three times. The consequence is, that the actual crystallisation process is a high quality process, which provides much better conditions for the crystals to be initiated and to develop in numbers than by the prior art. This is due to the severely extended time period that the chocolate has available in the crystallisation stage.

As a further consequence of the prolonged time period available for crystallisation, the temperature of the crystallisation surfaces can be raised to more than 19 ºC, i.e. typically 20 ºC. Then, the crystal initiation primarily takes place in the mass instead of at cold crystallisation surfaces as by the prior art. The amount of undesirable crystals, which always concomitant develop at cold surfaces, are then diminishing, and the need for re-melting these crystals in the conditioning and mixing stage is avoided. As a consequence, the resultant quality is higher with the inventive apparatus and the energy is not needed any longer for reheating the total mass 0,5-2,0ºC as by the prior art.

The inlet of the primary conduit can be connected to the end of the cooling stage as close as possible to the transition between the cooling stage and the crystallisation stage as possible. This means, that in practice, the inlet could be arranged in either of both stages, when its not practically possible to arrange it just in-between the two stages. However, decisive is, that the by-passed chocolate mass is essentially free from crystals.

The outlet of the primary conduit can be connected to the beginning of the conditioning stage as close as possible to the transition between the crystallisation stage and the conditioning and mixing stage. This means, that in practice the inlet could be arranged in each of both stages, when its not practically possible to arrange it just in-between the two stages. However, decisive is, that the by-passed chocolate mass is essentially free from crystals and that the chocolate mass be crystallised is sufficiently crystallised when the mass is mixed together.

The primary conduit is arranged inside the tempering column, in the shaft for the stirring tools. When the tempering column is of the type where the central shaft is surrounded by ring-shaped openings for the flow of the chocolate, then it is especially advantageous construction-wise to arrange the primary by-pass channel in the shaft. However, decisive is that the primary conduit is adapted to by-pass the crystallisation stage.

The invention is further described by referring to the drawing, in which
figure 1 discloses a tempering apparatus according to the invention, seen from the side,
figure 2 schematically discloses an example of the inside of the apparatus,
figure 3 schematically discloses another example of the inside of the apparatus,
figure 4 schematically discloses a further example of the inside of the apparatus,
figure 5 schematically discloses an embodiment by which the by-pass conduit is arranged in the central shaft of the apparatus,
figure 6 schematically discloses another embodiment by which the by-pass conduit is arranged in the central shaft of the apparatus,
figure 7 schematically discloses a further embodiment by which the by-pass conduit is arranged in the central shaft of the apparatus, and
figure 8 schematically discloses yet a further embodiment by which the by-pass conduit is arranged in the central shaft of the apparatus.

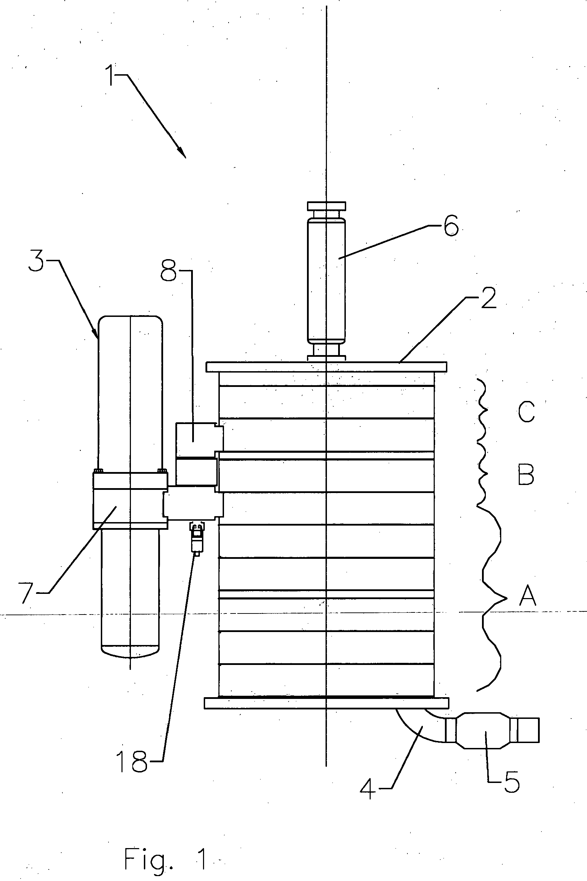

The apparatus 1 disclosed in figure 1 comprises a tempering column 2 for continuous tempering of chocolate mass. Externally on the column 2 is arranged a device 3, which is not part of the present invention. The device is for by-passing chocolate outside the column, an inlet 4 and a pump 5 for pumping chocolate mass into the column 2, and an outlet 6 for the ready tempered mass leaving the column. The column 2 is normally arranged in a steel frame or support, which is not disclosed, as it is not part of the invention.

The column 2 comprises a cooling stage A, a crystallisation stage B and a conditioning and mixing stage C. The device 3 comprises a pump 7 as well as a block 8 with internal conduits.

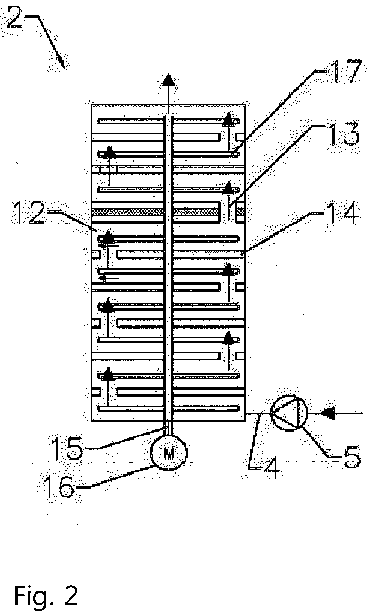

In figure 2 is disclosed, that the apparatus could have disc-shaped chocolate chambers 12 interconnected via chocolate channels 13 and intermediary disc-shaped water chambers 14. A central shaft 15 is connected with stirring tools 17 arranged in the chocolate chambers 12. A motor 16 rotates the shaft 15.

Several tests were performed with the apparatus 1.

When tempering dark chocolate of a well-known type such as "Easy-melt" with a fatcontent of 32% from Barry Callebaut, a maximum out-put of 1800 kg/hour well-tempered chocolate was achieved. Between 90% and 75% of the mass is by-passed, so that between 10% and 25% of the mass was passing through the crystallisation stage B being crystallised. The maximum output of 1800 kg/hour is to be compared with the maximum achievable maximum output of 1000 kg/hour for a traditional set-up of the same column 2 in a prior art tempering machine of the AMC type from Aasted-Mikroverk. The total energy consumption for the machine was between 7,7 W/Kg/hour well tempered chocolate and 8,71 W/Kg/hour tempered chocolate.

The total energy consumption for a traditional set-up of the particular column tempering the same type of dark chocolate uses between 20 W/Kg/hour tempered chocolate and 25 W/Kg/hour tempered chocolate. The traditional set-up of the column in the AMC uses 20 W/Kg/hour tempered chocolate. Other types of tempering machines at the market uses up to 25 W/Kg/hour tempered chocolate when they are equipped with stirring tools in the form of sheaves.

At another series of tests with a generally uses type of milk chocolate with a fatcontent of 36% was performed with the apparatus 1. Between 90% and 67% of the mass was by-passed outside the crystallisation stage B. Then between 10% and 33% was passed through the crystallisation stage B. The maximum output reached was between 1400 kg/hour and 1800 kg/hour well-tempered chocolate. The Energy consumption was between 7,04 W/Kg/hour and 8,23 W/Kg/hour tempered chocolate.

A further series of tests were made with a common type of nougat. The maximum output reached was between 1400 kg/hour and 1600 kg/hour well-tempered nougat. The crystallised stream was 25% and the energy consumptions were between 9,0 and 10,0 W/Kg/hour tempered chocolate.
The results with nougat are especially astonishing, as nougat has always been very difficult to achieve well-tempered without a content of instable crystals. The achieved quality of the nougat made with the inventive apparatus is impressive, which has been proved by taking out numerous tempering curves from samples. Test taken with DSC (Differential Scanning Calorimeter) proves that the samples contain βV-crystals only.

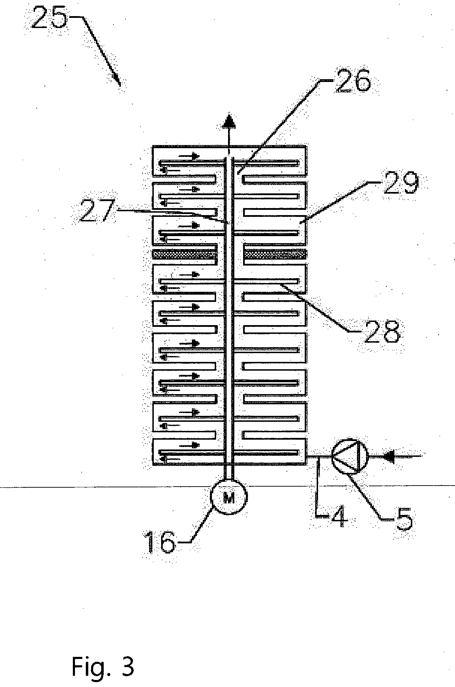

However, the column of apparatus 1 could have several different inner configurations as long as it is able to perform continuous tempering of fat-containing, crystallisable chocolate mass. As disclosed in figure 3 the column 25 the chocolate channels can also be arranged as ring-shaped openings 26, through which a shaft 27 extends. When the openings 26 are ring-shaped the stirring tools 28 are typically sheave-formed so that the chocolate can pass through at a further ring-shaped opening 29 at the periphery. An external pump 5 provides a pressure for the flow of chocolate through the chambers of the apparatus.

The flow-direction of the chocolate is in figures 2 and 3 disclosed from bottom to top. However it could also be from top to bottom of the columns, or it could even be horizontal as long as the by-passing conduit is arranged according to the inventive idea.

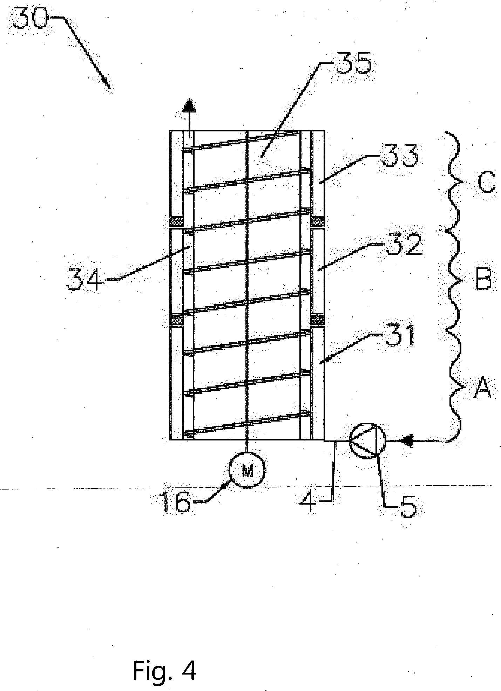

The apparatus could also be of a configuration such as shown in figure 4, by which the column 30 comprises ring-shaped water chambers 31, 32 and 33 at the perishery, surrounding an inner circular channel 34 for the chocolate mass. In the chocolate channel is arranged a rotating screw 35 extending all through the column. The water chamber 31 is then arranged in the cooling stage A, the water chamber 32 is arranged in the crystallisation stage B and the water chamber 33 is arranged in the conditioning and mixing stage C.

The outer periphery of the screw 35 is typically only a few millimetres from the inner surface wall of the surrounding water chambers. The screw is acting as pump means for the transportation of the chocolate through the column 30.

The apparatus could also be a so-called high shear tempering apparatus. The configuration corresponds to that disclosed in figure 4 when the screw is exchanged with a rotating shaft with two or more longitudinally extending knife means. The knives have surfaces, that slides over the inner periphery of the chocolate channel during rotation of the shaft.

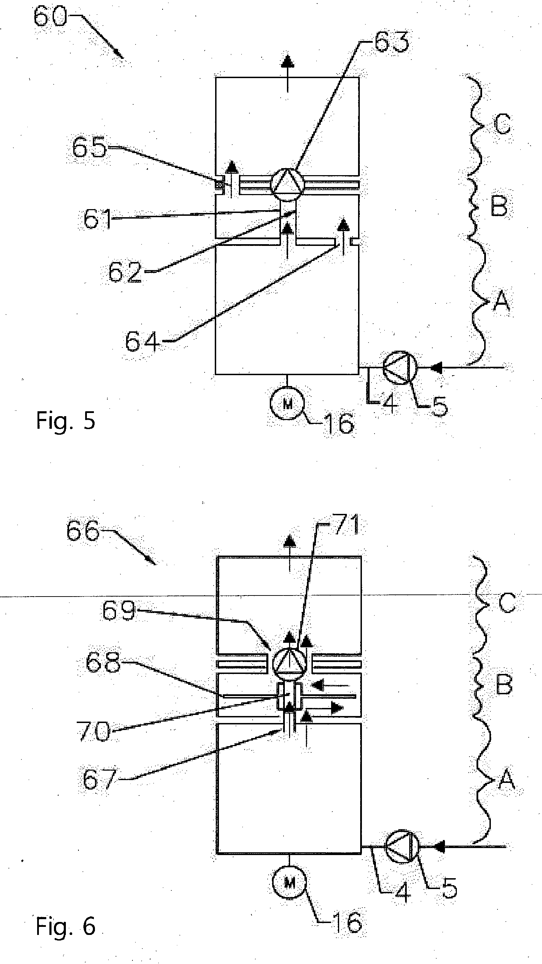

In figures 5, 6, 7 and 8 are disclosed different embodiments according to the invention, by which the conduits for by-passing chocolate mass are arranged inside the tempering columns. All embodiments comprise a cooling stage A, a crystallisation stage B and a mixing stage C.

In figure 5 the column 60 comprises a hollow shaft 61 with a conduit 62 and a pump 63 for by-passing chocolate mass. The mass enters the column 60 at the inlet 4. The complete mass is cooled in the cooling stage A. A predetermined amount of mass, for example between. 95% and 65% is by-passed the crystallisation stage B by being pumped directly to the mixing stage C. The shaft 61 could comprise non-disclosed openings in the side, through which the mass enters into the conduit 62 and via the pump 63 is pumped into the mixing stage C. The remaining mass enters via the opening 64 into the crystallisation stage B. In stage B between 5% and 40% of the mass is crystallised whereafter it flows through the opening 65 and into the mixing stage C where the mixing with the remaining mass is performed. The stirring tools arranged on the shaft could have many different configurations wherefore they are not disclosed. They could for example have the shape of wings or sheaves.

In figure 6 the column 66 is of the type where the shaft 67 comprise stirring tools in the form of sheaves 68. The chocolate then passes on from chocolate chamber to chocolate chamber via ring-shaped openings 69. A conduit 70 and a pump 71 is arranged for pumping the by-passed chocolate mass directly from the cooling stage A, through the conduit 70 arranged in the shaft 67 and to the mixing stage C.

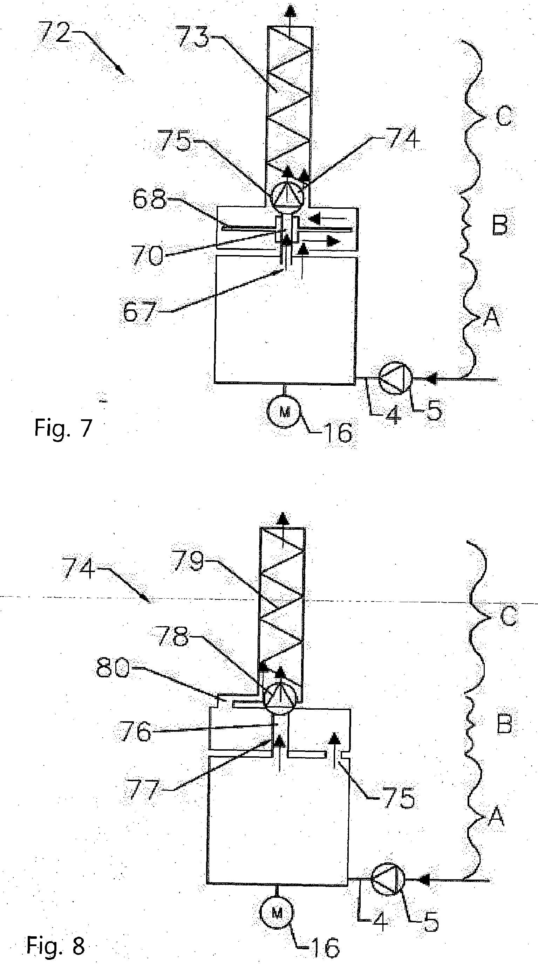

In figure 7 the column 72 comprises the shaft 67 having stirring tools in the form of sheaves 68. The chocolate then passes on from chocolate chamber to chocolate chamber via ring-shaped openings 69. The mixing stage C is however arranged in a separate mixer part 73, which is build on to the crystallisation stage B. The mixer part 73 could be a highly effective static mixer. A pump 74 is arranged for pumping the by-passed amount through a channel 70 in the shaft 67 and directly from the cooling stage A and to the mixer part 73. The remaining amount of mass is crystallised in stage B and flow through the ring-shaped opening 75 into the mixer 73.

In figure 8 is disclosed a variation of the embodiment of figure 7. The column 74 comprises openings 75 for the chocolate arranged at the periphery. Mass is bypassed through the conduit 76 in the shaft 77 and is pumped via the pump 78 into the mixer 79. The amount of mass, that is flowing into the crystallisation stage via the opening 75 leaves the stage B through the opening 80 to the mixer part 79 where the intensive mixing of the two amounts of mass is continuously performed.

## Claims

1. Apparatus (60, 66, 72, 74) for continuous tempering of chocolate mass comprising a cooling stage (A), a crystallisation stage (B) and a mixing stage (C) arranged as a tempering column with a central shaft (61, 67, 77) with stirring tools (68) as well as pump means (5) for the chocolate mass, **characterised in,**
**that** a primary conduit (62,70,76) for chocolate mass is arranged by-passing the stage (B) for creating crystals, which conduit is arranged in the shaft (61, 67, 77), which is hollow.

2. Apparatus according to claim 1, **characterised in, that** the shaft (67) comprise stirring tools in the form of sheaves (68), and that the chocolate then passes on from chocolate chamber to chocolate chamber via ring-shaped openings (69).

3. Apparatus according to claim 1, **characterised in, that** a pump (63, 71, 74, 78) is arranged to by-pass the chocolate mass through the conduit (62, 70, 76) in the hollow shaft.

4. Apparatus according to claim 1, **characterised in, that** the shaft (61) comprises openings in the side, through which the mass enters into the conduit (62) and via the pump (63) is pumped into the mixing stage (C).

5. Apparatus according to claim 1, **characterised in, that** the primary conduit (62,70,76) arranged by-passing the stage (B) for creating crystals is adapted to by-pass more than half of the total amount of mass entering the apparatus (60, 66, 72, 74).

6. Apparatus according to claim 1, **characterised in, that** the primary conduit (62,70,76) is adapted to by-pass between 65% and 95% of the total amount of mass entering the apparatus (60, 66, 72, 74).

## Patentansprüche

1. Vorrichtung (60, 66, 72, 74) zum kontinuierlichen Temperieren einer Schokoladenmasse, umfassend eine Kühlstufe (A), eine Kristallisierungsstufe (B) und eine Mischstufe (C), die als eine Temperiersäule mit einer mittleren Welle (61, 67, 77) mit Rührwerkzeugen (68) sowie Pumpenmitteln (5) für die Schokoladenmasse angeordnet ist, **dadurch gekennzeichnet, dass** eine Primärleitung (62, 70, 76) für Schokoladenmasse unter Vorbeiführung an der Stufe (B) zur Erzeugung von Kristallen angeordnet ist, wobei die Leitung in der Welle (61, 67, 77) angeordnet ist, die hohl ist.

2. Vorrichtung nach Anspruch 1, **dadurch gekennzeichnet, dass** die Welle (67) Rührwerkzeuge in der Form von Scheiben (68) umfasst und dass die Schokolade dann über ringförmige Öffnungen (69) von Schokoladenkammer zu Schokoladenkammer geht.

3. Vorrichtung nach Anspruch 1, **dadurch gekennzeichnet, dass** eine Pumpe (63, 71, 74, 78) zum Vorbeiführen der Schokoladenmasse durch die Leitung (62, 70, 76) in der hohlen Welle angeordnet ist.

4. Vorrichtung nach Anspruch 1, **dadurch gekennzeichnet, dass** die Welle (61) Öffnungen in der Seite umfasst, durch die die Masse in die Leitung (62) eintritt und über die Pumpe (63) in die Mischstufe (C) gepumpt wird.

5. Vorrichtung nach Anspruch 1, **dadurch gekennzeichnet, dass** die unter Vorbeiführung an der Stufe (B) zur Erzeugung von Kristallen angeordnete Primärleitung (62, 70, 76) geeignet ist, mehr als die Hälfte der Gesamtmenge an in die Vorrichtung (60, 66, 72, 74) eintretender Masse vorbeizuführen.

6. Vorrichtung nach Anspruch 1, **dadurch gekennzeichnet, dass** die Primärleitung (62, 70, 76) geeignet ist, zwischen 65% und 95% der Gesamtmenge an in die Vorrichtung (60, 66, 72, 74) eintretender Masse vorbeizuführen.

## Revendications

1. Appareil (60, 66, 72, 74) pour le conditionnement thermique continu de masse de chocolat comprenant un étage de refroidissement (A), un étage de cristallisation (B) et un étage de mélange (C) disposés sous forme de colonne de conditionnement thermique avec un arbre central (61, 67, 77) avec des outils de mélange (68) ainsi qu'un moyen de pompe (5) pour la masse de chocolat, **caractérisé en ce qu'**un conduit primaire (62, 70, 76) pour la masse de chocolat est disposé de manière à contourner l'étage (B) pour créer des cristaux, lequel conduit est disposé dans l'arbre (61, 67, 77), qui est creux.

2. Appareil selon la revendication 1, **caractérisé en ce que** l'arbre (67) comprend des outils de mélange sous la forme de disques (68), et **en ce que** le chocolat passe ensuite d'une chambre de chocolat à l'autre par le biais d'ouvertures en forme d'anneau (69).

3. Appareil selon la revendication 1, **caractérisé en ce qu'**une pompe (63, 71, 74, 78) est prévue pour contourner la masse de chocolat à travers le conduit (62, 70, 76) dans l'arbre creux.

4. Appareil selon la revendication 1, **caractérisé en ce que** l'arbre (61) comprend des ouvertures dans le côté, à travers lesquelles la masse entre dans le conduit (62) et, par le biais de la pompe (63), est pompée dans l'étage de mélange (C).

5. Appareil selon la revendication 1, **caractérisé en ce que** le conduit primaire (62, 70, 76) prévu pour contourner l'étage (B) pour créer des cristaux est prévu pour contourner plus de la moitié de la quantité totale de masse entrant dans l'appareil (60, 66, 72, 74).

6. Appareil selon la revendication 1, **caractérisé en ce que** le conduit primaire (62, 70, 76) est prévu pour contourner entre 65 % et 95 % de la quantité totale de masse entrant dans l'appareil (60, 66, 72, 74).
